(19) Europäisches Patentamt
European Patent Office
Office européen des brevets

(11) **EP 2 466 530 A1**

(12) **EUROPÄISCHE PATENTANMELDUNG**

(43) Veröffentlichungstag:
   **20.06.2012 Patentblatt 2012/25**

(51) Int Cl.:
   ***G06N 3/00*** *(2006.01)*

(21) Anmeldenummer: **10195430.3**

(22) Anmeldetag: **16.12.2010**

(84) Benannte Vertragsstaaten:
   **AL AT BE BG CH CY CZ DE DK EE ES FI FR GB GR HR HU IE IS IT LI LT LU LV MC MK MT NL NO PL PT RO RS SE SI SK SM TR**
   Benannte Erstreckungsstaaten:
   **BA ME**

(71) Anmelder: **SIEMENS AKTIENGESELLSCHAFT**
   **80333 München (DE)**

(72) Erfinder: **Hartmann, Dirk**
   **83550 Emmering (DE)**

(54) **Verfahren zum Simulieren eines Personenstroms und Vorrichtung zum Generieren eines zellularen Automaten zum Simulieren eines Personenstroms**

(57) Verfahren zum Simulieren eines Personenstroms und Vorrichtung zum Generieren eines zellularen Automaten zum Simulieren eines Personenstroms

Die Erfindung betrifft ein Verfahren zum Simulieren eines Personenstroms entlang eines Navigationsgraphen, mit den Schritten des eines Navigationsgraphen mit einer Vielzahl von Knotenpunkten, welche über eine Vielzahl von Wegekanten verbunden sind, des Erzeugens von Positionen einer Vielzahl von Personen auf den mit jeweils einer jeder der Vielzahl von Personen zugeordneten Bewegungsgeschwindigkeit, und des periodischen Wiederholen eines Simulationsschritts nach einer vorbestimmten Periodendauer, wobei der Simulationsschritt umfasst: Aktualisieren der Bewegungsgeschwindigkeit für jede der Vielzahl von Personen in Abhängigkeit von der lokalen Personendichte in der Umgebung der jeweiligen Position der Person und Berechnen einer aktualisierten Position für jede der Vielzahl von Personen in Abhängigkeit von der aktualisierten Bewegungsgeschwindigkeit.

FIG 1

## Beschreibung

Verfahren zum Simulieren eines Personenstroms und Vorrichtung zum Generieren eines zellularen Automaten zum Simulieren eines Personenstroms

Die vorliegende Erfindung bezieht sich auf ein Verfahren zum Simulieren eines Personenstroms entlang eines Navigationsgraphen, und eine Vorrichtung zum Generieren eines zellularen Automaten zum Simulieren eines Personenstroms entlang eines Navigationsgraphen.

Stand der Technik

Simulationen von Personenströmen sind bei der Modellierung verkehrsphysikalischer Prozesse von großer Bedeutung. Bei der Beschreibung von Verkehrsprozessen, beispielsweise der kollektiven Bewegung Fußgängern entlang vorgegebener Routen, zum Beispiel in Gebäuden, entlang von Straßenzügen oder Fußwegen, oder auf vordefinierten Wegen bei Großveranstaltungen, auf Bahnhöfen oder dergleichen, ist es von großer Bedeutung, die Systemumgebung möglichst wirklichkeitsgetreu wiedergeben zu können, um die darin ablaufenden Bewegungsprozesse zur Simulation realitätsnaher Abläufe an die entsprechenden Rand- und Besser anpassen zu können. Gleichzeitig ist es wichtig, robuste Simulationen zu gewährleisten, um eine Reproduzierbarkeit von Navigationsstrategien, beispielsweise in einer Personenevakuierungssituation, auch bei geringfügigen Änderungen der Systemparameter sicherzustellen.

Dabei kommt es insbesondere auf die Realitätstreue der verwendeten topologischen Modelle auf der einen Seite und der verwendeten Simulationsverfahren auf der anderen Seite an, um Evakuierungszeiten bei vorgegebenen Evakuierungsstrategien zuverlässig vorhersagen zu können.

Ein effektiver Ansatzpunkt für die Simulation von Verkehrsprozessen ist die Bildung von Graphenmodellen. Graphenmodelle beruhen auf einer gemäß der Topologie des Simulationsgebiets gebildeten Graphen mit Knotenpunkten, die Kreuzungen und Abzweigungen modellieren, und Kanten, die mögliche Routen zwischen den Knotenpunkten darstellen.

Es ist nebenher weiterhin unerlässlich, grundlagen für das Verhalten von Personenströmen in einem Modell wirklichkeitsnah abzubilden. Hierzu benötigt man Kenntnisse über die Geschwindigkeitsverteilungen in einem Personenstrom mit einer Vielzahl von Individuen und funktionale Dichte-Geschwindigkeitsdiagramme, sogenannten Fundamentaldiagramme, um Änderungen von Individualgeschwindigkeiten in einer dynamischen Simulation effektiv abschätzen zu können.

Zur von Personenströmen werden häufig sogenannte Zellularautomaten eingesetzt, das heißt, Rechenmodelle auf der Basis eines Gitternetzes mit Gitterzellen, in dem Personen platziert werden und mithilfe dessen über Zustandsübergangsregeln dynamisch und zeitlich veränderlich den Gitterzellen verschiedene Zustände zugewiesen werden können. Mit Ablauf der Simulation ergeben sich für den Zellularautomaten zeitabhängige Konfigurationszustände, die jeweils von einem oder mehreren der vorherigen Konfigurationszustände gemäß der Zustandsübergangsregeln abhängen.

Die allgemeine Aussagekraft der Bewertung von Personenstromsimulationen, insbesondere von Evakuierungsstrategien ist durch die Komplexität des eingesetzten Zellularautomaten limitiert. Durch das nicht-deterministische Verhalten von Personen, insbesondere im Bewegungsverhalten in einer Gruppe von Personen, haben eine Reihe zufälliger Effekte Einfluss auf das Ergebnis von Simulationen. Verlässliche und vor allem robuste Aussagekraft besitzen üblicherweise nur diejenigen Modelle, welche die zufälligen Effekte über Statistikbildung mit einbeziehen.

Der hohe Einflussgrad externer Effekte sowie die Komplexität realer Navigationstopologien erfordert bei der numerischen Simulation von Personenströmen einen hohen Zeitaufwand. Häufig ist innerhalb eines realistischen Zeitrahmens keine verlässliche Aussage zu robusten Evakuierungsstrategien möglich.

Um den Zeitaufwand zu drosseln, können Modelle vereinfacht werden, beispielsweise über die Reduktion der freien Parameter einer Simulation oder der Auferlegung von geometrischen Zwangs- und Randbedingungen für die Bewegung von Individuen. Dies birgt das Risiko, zufällige Schwankungen in realen Personenströmen nicht ausreichend oder sogar falsch zu berücksichtigen.

Es besteht daher ein Bedarf an Optimierungsstrategien für die Simulation von Personenströmen, insbesondere zur Erarbeitung von Evakuierungsstrategien, welche einen vertretbaren Rechen- und Zeitaufwand erfordern, zugleich aber die nötige Robustheit gegenüber zufälligen und statistischen Schwankungen der Randbedingungen aufweisen.

Offenbarung der Erfindung

Eine grundlegende Idee der Erfindung besteht darin, ein einfaches Verfahren zum Simulieren eines Personenstroms anzugeben, welches eine schnelle Aussage bezüglich des Verhaltens einer Vielzahl von Personen, insbesondere in Evakuierungssituationen gibt.

Die vorliegende Erfindung schafft daher ein Verfahren nach Anspruch 1 zum Simulieren eines Personenstroms entlang eines Navigationsgraphen, mit den Schritten des Bereitstellens eines Navigationsgraphen mit einer Vielzahl von Knotenpunkten, welche über eine Vielzahl von Wegekanten verbunden sind, des Erzeugens von Positionen einer Vielzahl von Personen auf den Wegekanten mit jeweils einer jeder der Vielzahl von Personen zugeordneten Bewegungsgeschwindigkeit, und des periodischen Wiederholens eines Simulationsschritts nach einer vorbestimmten Periodendauer, wobei der Simulationsschritt die Teilschritte des Aktualisierens der Bewegungsgeschwindigkeit für jede der Vielzahl von Personen in Abhängigkeit von der lokalen Personendichte in der Umgebung der jeweiligen Position der Person, des Berechnens einer aktualisierten Position für jede der Vielzahl von Personen in Abhängigkeit von der aktualisierten Bewegungsgeschwindigkeit umfasst.

Vorteilhafterweise kann die Vielzahl von Wegekanten des Navigationsgraphen in eine Vielzahl von Teilabschnitten unterteilt werden, wobei die lokale Personendichte für jeden der Teilabschnitte bestimmt wird, und wobei das Aktualisieren der Bewegungsgeschwindigkeit in Abhängigkeit von der lokalen Personendichte der benachbarten Teilabschnitte des Teilabschnitts, in dem die aktuelle Position der jeweiligen Person liegt, erfolgt. Gemäß einer Ausführungsform erfolgt das Berechnen der aktualisierten Position für jede der Vielzahl von Personen dann vorzugsweise relativ zur Position des Teilabschnitts, in dem sich die Position der jeweiligen der Vielzahl von Personen befindet.

Gemäß einer bevorzugten Ausführungsform werden die Positionskoordinaten der Position der Vielzahl von Personen eindimensional gewählt.

Gemäß einer weiteren Ausführungsform unterliegen die jeder der Vielzahl von Personen zugeordneten Bewegungsgeschwindigkeiten einer Normalverteilung.

Die Erfindung schafft weiterhin eine Vorrichtung nach Anspruch 7 zum Generieren eines zellularen Automaten zum Simulieren eines Personenstroms entlang eines Navigationsgraphen, mit einer Bereitstellungseinrichtung, welche dazu ausgelegt ist, einen Navigationsgraphen mit einer Vielzahl von Knotenpunkten, welche über eine Vielzahl von Wegekanten verbunden sind, bereitzustellen, einer Erzeugungseinrichtung, welche dazu ausgelegt ist, einen zellularen Automaten mit Teilabschnitten auf der Basis des Navigationsgraphen und Positionen einer Vielzahl von Personen auf den Teilabschnitten mit jeweils einer jeder der Vielzahl von Personen zugeordneten Bewegungsgeschwindigkeit zu erzeugen, und einer Simulationseinrichtung, welche dazu ausgelegt ist, die Bewegungsgeschwindigkeit für jede der Vielzahl von Personen in Abhängigkeit von der lokalen Personendichte in der Umgebung der jeweiligen Position der Person zu aktualisieren, und eine aktualisierten Position für jede der Vielzahl von Personen in Abhängigkeit von der aktualisierten Bewegungsgeschwindigkeit zu berechnen. Weitere Modifikationen und Variationen ergeben sich aus den Merkmalen der abhängigen Ansprüche.

Kurze Beschreibung der Zeichnungen

Verschiedene Ausführungsformen und Ausgestaltungen der vorliegenden Erfindung werden nun in Bezug auf die beiliegenden Zeichnungen genauer beschrieben. Es zeigen dabei:

Fig. 1     eine schematische Darstellung eines Gebiets mit einer Beispieltopologie eines Gangsystems;

Fig. 2     eine schematische Darstellung eines Navigationsgraphen;

Fig. 3     eine schematische Darstellung eines Abschnitts einer Wegekante eines Navigationsgraphen gemäß einer Ausführungsform der Erfindung;

Fig. 4     einen schematischen Verfahrensablauf zur Simulation eines Personenstroms auf dem in Fig. 3 dargestellten Abschnitt einer Wegekante gemäß einer weiteren Ausführungsform der Erfindung;

Fig. 5     eine schematische Darstellung eines Verfahrens zum Simulieren eines Personenstroms entlang eines Navigationsgraphen gemäß einer weiteren Ausführungsform der Erfindung; und

Fig. 6     eine schematische Darstellung einer Vorrichtung zum Generieren eines Zellularautomaten zum Simulieren eines Personenstroms entlang eines Navigationsgraphen gemäß einer weiteren Ausführungsform der Erfindung.

Die beschriebenen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausbeschriebenes Merkmale der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Gleiche Bezugszeichen bezeichnen dabei gleiche oder ähnlich wirkende Komponenten.

Ausführliche Beschreibung der Erfindung

Die Notation eines Graphen bzw. eines Navigationsgraphen, wie sie im Sinne der Erfindung verwendet wird, bezieht sich auf geometrische Konstrukte, die mögliche Wege bzw. Routen durch oder auf einem Gebiet definieren. Dabei erfüllen Navigationsgraphen im Sinne der Erfindung die Voraussetzung, dass je zwei unterschiedliche Wege mit gleichen Start- und Endpunkten auf dem Gebiet durch mindestens ein Hindernis getrennt werden, das heißt. Navigationsgraphen sind minimale Graphen. Navigationsgraphen im Sinne der Erfindung bilden reale Wegesysteme ab, beispielsweise Evakuierungswege für Personen in einem Gebäude, auf einem Veranstaltungsgelände oder in ähnlichen Gebieten. Die Kanten der Navigationsgraphen sind dabei Wegekanten, das heißt, sie bilden eine eindimensionale Darstellung eines möglichen Weges zwischen zwei Knotenpunkten des Navigationsgraphen. Knotenpunkte des Navigationsgraphen können dabei Weggabelungen, Kreuzungen oder ähnliche Wegpunkte darstellen, an denen Personen zur Wegfindung zwei oder mehr Möglichkeiten zur Bewegung entlang der von dem betreffenden Wegpunkt ausgehenden Wegekanten haben. Es kann auch sein, dass Knotenpunkte Abschnittsbeegrenzungen zwischen zwei Wege kanten darstellen, an denen sich die Bewegungsbedingungen in erheblicher Weise ändern, beispielsweise durch eine Tür, eine Schranke, eine Veränderung der geometrischen Parameter der angrenzenden Wege oder dergleichen.

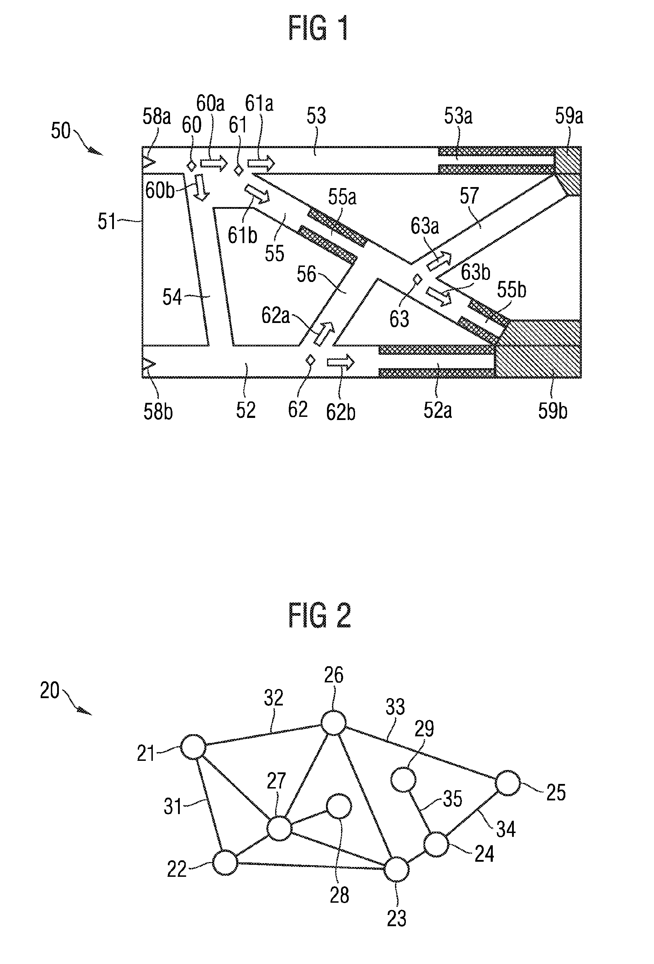

Fig. 1 zeigt eine schematische Darstellung eines Gebiets 50 mit einer Beispieltopologie eines Gangsystems 51. Das Gangsystem 51 umfasst dabei eine Vielzahl von sich gabelnder und kreuzender Gänge 52, 53, 54, 55, 56 und 57. Die Gänge 52, 53, 54, 55, 56 und 57 müssen von Personen, welche aus den Quellen 58a und 58b auf der linken Seite der Zeichenebene in das Gangsystem 51 gespeist werden, auf beliebige Art durchquert werden, um zu Ausgängen 59a oder 59b zu gelangen. Die Gänge 52, 53, 54, 55, 56 und 57 haben beispielhaft eine Gangbreite von zehn Metern und weisen am bestimmten vordefinierten Stellen Engstellen 52a, 53a, 55a und 55b auf, an denen die Gangbreite über eine gewisse Länge des jeweiligen Gangs schmäler ist. Beispielhaft ist die Gangbreite der Engstelle 52a zwei Meter, der Engstelle 53a ein Meter, der Engstelle 55a zwei Meter und der Engstelle 55b fünf Meter.

Ziel einer Simulation eines Personenstroms einer Vielzahl von Personen, welche mit einer vorbestimmten Quellrate aus den Quellen 58a und 58b in das Gangsystem 51 eintreten, ist es nun, eine Evakuierungszeit für die Vielzahl der Personen zu optimieren, das heißt, die Gesamtheit der in das Gangsystem 51 eintretenden Personen so schnell wie möglich in die Ausgänge 59a und 59b zu führen. Dabei sind grundsätzlich verschiedene Wegführungen durch das Gangsystem 51 möglich.

Als freie Parameter der Simulation können hierbei die Aufteilung der Personen an Kreuzungspunkten 60, 61, 62 und 63 gewählt werden. Beispielsweise kann am Kreuzungspunkt 62 ein Teil der am Kreuzungspunkt 62 aus dem Gang 52 eintreffenden Personen in der Richtung 62a in den Gang 56 geleitet werden, und der verbleibende Teil der Personen in der Richtung 62b den Gang 52 weitergeleitet werden. Die Aufteilung der Personen wird dabei davon abhängen, in welchen der Gänge möglicherweise Stauungen auftreten und wie groß die Reisezeiten bis zu einem der Ausgänge 59a und 59b voraussichtlich sein wird.

Führt man diese Simulation mit einem herkömmlichen Optimierungsalgorithmus durch, beispielsweise einem Simplex-Algorithmus, so zeigt sich, dass die Evakuierungsstrategien, also die Wahl der Aufteilung der Personenströme an den Kreuzungspunkten stark von Schwankungen in den externen Randbedingungen abhängig sind.

Tabelle 1

| $\Delta g[\%]$ | $\Delta s[\%]$ | $\Delta w[\%]$ | K60 | K61 | K63 | K62 | $T_{ev}$ |
|---|---|---|---|---|---|---|---|
| 0 | 0 | 0 | 80:20 | 13:87 | 75:25 | 57:43 | 659,9±6,8 |
| 20 | 0 | 0 | 81:19 | 29:71 | 42:58 | 70:30 | 657,8±l47,0 |
| 0 | 20 | 0 | 80:20 | 13:87 | 77:23 | 60:40 | 660,5±6,3 |
| 0 | 0 | 20 | 75:25 | 14:86 | 70:30 | 67:33 | 660,8±9,8 |
| 20 | 20 | 20 | 76:24 | 32:68 | 28:72 | 71:29 | 660,4±141,6 |

Tabelle 1 zeigt die Ergebnisse der Simulation mit dem Simplex-Algorithmus für die in Fig. 1 gezeigte Evakuierungssituation. Dabei ist die Evakuierungszeit $T_{ev}$ als Optimierungsziel gewählt worden. Die Personenstromaufteilungen K60, K61, K62, und K63 and den jeweiligen Kreuzungspunkten 60, 61, 62 bzw. 63 sind als freie Parameter variabel gehalten worden. In jeder Zeile werden verschiedene Simulationsergebnisse angegeben, jeweils in Abhängigkeit von Schwankungen $\Delta g$ der Breiten an den Engstellen 52a, 53a, 55a und 55b, von Schwankungen $\Delta s$ der Quellrate von Personen in den Quellen 58a und 58b und von Schwankungen $\Delta w$ an den Weggabelungen. In der ersten Zeile sind keine Schwankungen in die Simulation miteinbezogen worden. In der zweiten Zeile hingegen sind Schwankungen von $\Delta g = 20\%$ in den Breiten an den Engstellen 52a, 53a, 55a und 55b in die Simulation miteinbezogen worden. Obwohl die optimierte Evakuierungszeit in etwa der ermittelten Evakuierungszeit in der ersten Zeile entspricht, lassen sich erheblich Abweichungen in der gewählten Evakuierungsstrategie feststellen. So schlägt die optimale Evakuierungsstrategie im ersten Fall beispielsweise vor, am Kreuzungspunkt 63 75% der an diesem Kreuzungspunkt ankommenden Personen in die Richtung 63a zu leiten, und die restlichen 25% in die Richtung 63b. Sobald man allerdings geringfügige Schwankungen wie im zweiten Fall mit einbezieht, schlägt die optimale Evakuierungsstrategie der zweiten Zeile vor, am Kreuzungspunkt 63 nur noch 42% der an diesem Kreuzungspunkt ankommenden Personen in die Richtung 63a zu leiten, und die restlichen 58% in die Richtung 63b. Dies zeigt, dass die die Evakuierungsstrategie der ersten Zeile nicht robust gegenüber zufälligen Schwankungen der Randbedingungen und externer Effekte ist und es ihr daher an Verlässlichkeit mangelt.

Einen effizienten Ansatz zur Beschreibung von Personenströmen bieten Kontinuitätsgleichungen. Dabei wird nicht das zeitliche Verhalten einzelner Personen betrachtet, sondern die zeitliche und räumliche Entwicklung der Personendichte $\rho$. In einer Dimension kann eine Kontinuitätsgleichung der Form

$$\frac{d}{dt}(\rho(x,t)) + \frac{d}{dx}[\rho(x,t) * v(x,t;\rho(x,t))] = F(x,t)$$

aufgestellt werden. Dabei ist die Personendichte $\rho(x,t)$ ein zeitlich veränderliches Skalarfeld entlang der Positionskoordinaten x. Der Term $\rho(x,t) * v(x,t;\rho(x,t))$ stellt dabei die Impulsdichte des Personenstroms dar, wobei die Geschwindigkeit $v(x,t)$ der Personen am Ort x von der jeweiligen Personendichte $\rho(x,t)$ am Ort x abhängt. Der Term $F(x,t)$ beschreibt die Quellstärke des Personenstroms, das heißt, die Bilanz der Personen, die das betrachtete Gebiet betreten oder verlassen.

Dieser Ansatz berücksichtigt Geschwindigkeits-Dichte-Relationen, wie sie auch empirisch beobachtet werden können. Wie weiterhin empirisch festgestellt werden kann, hat jede Person eines Personenstroms bei ungestörter Bewegung, das heißt, in einer freien Ebene bzw. einer freien Bewegungsbahn, eine individuelle Geschwindigkeit $v_0$, die sogenannte freie Flussgeschwindigkeit. Bei Betrachtung eines statistischen Ensembles an Personen ist diese individuelle Geschwindigkeit $v_0$ im Allgemeinen normal verteilt, das heißt, es gibt einige wenige sich schnell bewegende Personen, einige wenige sich langsam bewegende Personen und ein Gros an Personen mit einer mittleren Bewegungsgeschwindigkeit.

Eine Berücksichtigung der Geschwindigkeiten einzelner Personen erlaubt damit eine genauere Beschreibung der Kontinuitätsgleichung. Dabei können die Personen insbesondere in Geschwindigkeitsklassen aufgeteilt werden, also in Gruppen von Personen, die sich momentan mit der gleichen Geschwindigkeit bewegen. Entsprechend kann die Personendichte ebenfalls gemäß dieser Geschwindigkeitsklassen aufgeteilt werden, wobei eine Summation der Personendichten der einzelnen Geschwindigkeitsklassen wieder die gesamte Personendichte ergeben muss:

$$\rho(x,t) = \int \rho(v_0;x,t)dv_0.$$

Damit kann die Kontinuitätsgleichung auch als

$$\frac{d}{dt}(\rho(v_0;x,t)) + \frac{d}{dx}[\rho(v_0;x,t) * v(x,t;\int \rho(v_0;x,t)dv_0)] = F(v_0;x,t)$$

ausgedrückt werden. Für jede Individualgeschwindigkeit $v_0$ kann dann ein eigenes Transportproblem gelöst werden, das heißt, die Flussgeschwindigkeit $v_0$ ist zusätzlich zu Position x und Zeit t ein freier Parameter. Berücksichtigt man zusätzlich noch die Geschwindigkeitsänderung von individuellen Personen in Abhängigkeit von der Personendichte, so kann für jede Geschwindigkeitsklasse ein Quellterm $G(v_0;x,t)$ aufgestellt werden, der den Ab- bzw. Zufluss an Personen von bzw. in die jeweilige Geschwindigkeitsklasse mit der Flussgeschwindigkeit $v_0$ berücksichtigt:

$$d/dt(\rho(v_0;x,t)) + d/dx[\rho(v_0;x,t)*v(x,t;\int\rho(v_0;x,t)dv_0)] =$$
$$F(v_0;x,t) + G(v_0;x,t).$$

Dabei gilt eine Personenerhaltung innerhalb des gesamten Personenstroms, das heißt, aus einer Geschwindigkeitsklasse verschwindende Personen müssen in einer anderen Geschwindigkeitsklasse wieder auftauchen:

$$\int G(v_0;x,t)dv_0 = 0.$$

Fig. 2 zeigt einen beispielhaften Navigationsgraphen 20. Der Navigationsgraph 20 kann in vielen Situationen die Wirklichkeit relativ akkurat wiedergeben, da gerade in Evakuierungssituationen Personenströme vorgegebenen eindimensionalen Pfaden folgen, beispielsweise Gängen in Gebäuden oder Fluchtwegen auf Veranstaltungsgeländen. Dabei erfolgt eine Bewegung der Individuen im Wesentlichen in eine Richtung, nämlich in die Fluchtrichtung. Ein Navigationsgraph 20 ist daher geeignet, als Modell für die Wegefindung für Personenströme zu dienen.

Der Navigationsgraph 20 umfasst dabei Knotenpunkte 21, 22, 23, 24, 25, 26, 27, 28 und 29, welche über Wegekanten 31, 32, 33 und 34 verbunden sind. Einige der Knotenpunkte weisen Weggabelungen auf, andere wiederum stellen lediglich eine Verbindung zwischen zwei einlaufenden Wegekanten her. Wiederum andere sind Knotenpunkte, die nur über eine einzige Wegekante mit einem benachbarten Knotenpunkt verbunden sind. Die jeweilige Topologie des Navigationsgraphen 20 orientiert sich dabei an der Realität, beispielsweise an Straßenzügen, Gängen oder dergleichen.

Der Navigationsgraph 20 aus Fig. 2 kann dabei einem eindimensionalen Zellularautomaten zum Simulieren von Personenströmen entlang der Wegekanten des Navigationsgraphen 20 als Basismodell dienen. Bei der Simulation der Personenströme können dabei die Personen selbst und nicht virtuelle Personendichteteilchen bewegt werden.

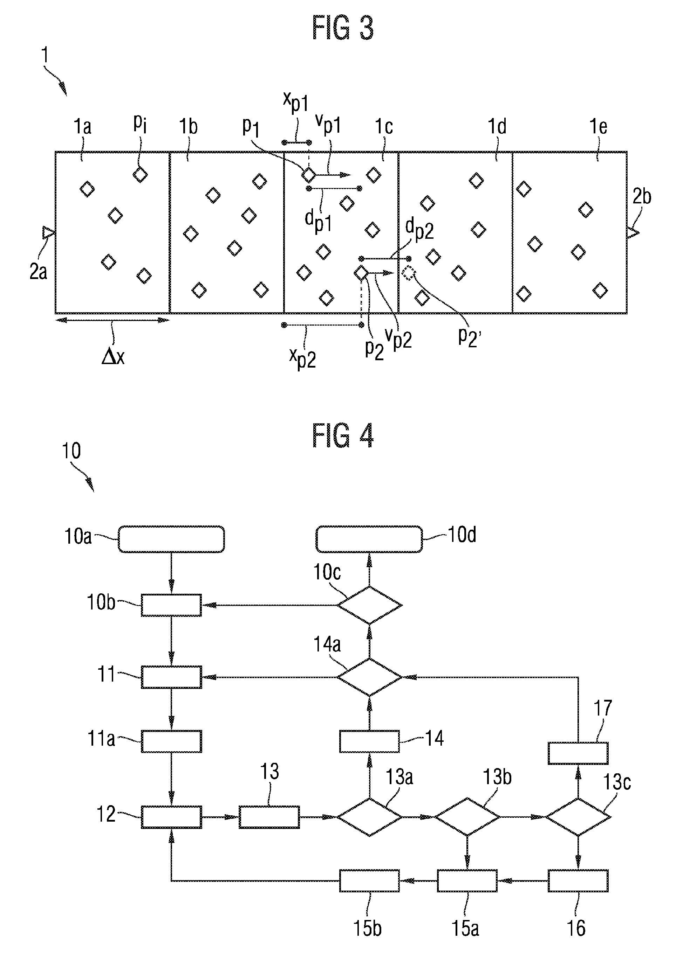

Fig. 3 zeigt die Grundstruktur eines erfindungsgemäßen Zellularautomaten 1 entlang einer Wegekante eines Navigationsgraphen, beispielsweise des Navigationsgraphen 5 aus Fig. 2. Die Struktur 1 umfasst dabei einen eindimensionalen Abschnitt einer Wegekante eines Navigationsgraphen, der in Teilabschnitte 1a, 1b, 1c, 1d und 1e eingeteilt werden kann, die jeweils die Länge $\Delta x$ in Bewegungsrichtung der Personen des Personenstroms aufweisen können. Selbstverständlich kann die Zahl und Länge $\Delta x$ der Teilabschnitte variieren und der Komplexität der Simulation angepasst werden. Von einer Quelle 2a treten Personen pi in den ersten Teilabschnitt 1a ein und bewegen sich über die Teilabschnittsgrenzen hinweg bis zu einer Senke 2b an einer hinteren Grenze des Teilabschnitts 1e. Personen können über einen Erzeugungsmechanismus an der Quelle 2a mit einer gewissen Quellrate erzeugt werden und bei Erreichen der hinteren Grenze des letzten Teilabschnitts 1e und somit der Senke aus der Simulation herausgenommen werden. Bei einem Erreichen der Senke 2b Können die Personen $p_i$ in andere Abschnitte bzw. andere Wegekanten des Navigationsgraphen eintreten.

Die Position $x_{pi}$ der Personen kann in Form von eindimensionalen Positionskoordinaten festgehalten werden. Es kann dabei vorteilhaft sein, die Position $x_{pi}$ relativ zur Länge $\Delta x$ der Teilabschnitte anzugeben. Beispielsweise befindet sich die Person $p_1$ im Teilabschnitt 1c an einer Position $x_{p1}$ relativ zur linken Grenze des Teilabschnitts 1c. Die Person $p_2$ im Teilabschnitt 1c befindet sich analog an einer Position $x_{p2}$ relativ zur linken Grenze des Teilabschnitts 1c. Die relativen Positionen können Verhältnisse zwischen der absoluten Positionskoordinate der Personen und der Länge $\Delta x$ der Teilabschnitte sein.

In vorgegebenen Abständen werden nun alle Personen $p_i$ mit ihrer momentanen Geschwindigkeit $V_{pi}$ bewegt. Dabei werden in einem Zeitschritt $\Delta t$ alle sich zu dem Zeitpunkt innerhalb des Abschnitts 1 befindlichen Personen $p_i$ in Richtung der Koordinate x entsprechend ihrer Momentangeschwindigkeit $v_{pi}$ bewegt. Bei Eintritt in den Abschnitt 1 kann dabei jeder Person gemäß einer statischen Verteilung eine zufällige Anfangsgeschwindigkeit $v_0$ zugewiesen werden. Die Geschwindigkeit ist jedoch zeitlich variabel und kann, wie oben gezeigt, von der Personendichte im Umkreis der Position der Person $p_i$ abhängig sein.

Die momentane Geschwindigkeit der Person kann sich aus ihrer individuellen Flussgeschwindigkeit $v_0$, aus den geometrischen Gegebenheiten des Abschnitts 1 und/oder der Interaktion mit anderen Personen in ihrer Nähe über eine Beziehung zur lokalen Personendichte $\rho$ ergeben. Um die Geschwindigkeitsänderung einer Person $p_i$ in einem Teilabschnitt 1i zu ermitteln, kann mit der Dichte im Teilabschnitt 1i, in dem sich die Person $p_i$ gerade befindet

$$\rho(1i) = \#p(1i)/(b*\Delta x)$$

sowie der Dichte im vorhergehenden Teilabschnitt und der Dichte im nachfolgenden Teilabschnitt eine für die jeweilige Person $p_i$ maßgebliche lokale Personendichte bestimmt werden. Dabei ist $\#p$ die Anzahl der Personen im betrachteten Teilabschnitt 1i und b die Breite des Abschnitts 1. Es kann selbstverständlich auch möglich sein, mehr oder weniger Teilabschnitte zur Interpolation der lokalen Personendichte $\rho$ heranzuziehen - die Anzahl von drei Teilabschnitten in der vorigen Darstellung ist nur eine beispielhafte Möglichkeit zur Bestimmung der lokalen Personendichte $\rho$. In Abhängigkeit von der bestimmten Personendichte $\rho$ kann eine Geschwindigkeitsänderung der momentanen Bewegungsgeschwindigkeit der Person $p_i$ vorgenommen werden. Gemäß einer Ausführungsform kann für die Bestimmung der Geschwindigkeitsänderung der momentanen Bewegungsgeschwindigkeit der Person $p_i$ lediglich die Personendichte in nachfolgenden Teilabschnitten berücksichtigt werden.

Die Bewegung einer Person $p_i$, die sich in dem Teilabschnitt 1i mit der relativen Position $x_{pi}$ befindet, erfolgt in einem Zeitschritt $\Delta t$. Beispielhaft wird die Bewegung anhand der Person $p_1$ in Fig. 3 erläutert, die sich im Teilabschnitt 1c befindet. Selbstverständlich kann für jede andere der Vielzahl von Personen in dem Abschnitt 1 die Bestimmung der Bewegung in ähnlicher Weise erfolgen.

Innerhalb des Zeitschritts $\Delta t$ kann sich die Person $p_1$ um eine absolute Distanz $v_{p1}*\Delta t$ bewegen. Relativ zur Länge $\Delta x$ des Teilabschnitts 1c bestimmt sich die Positionsänderung $d_{p1}$ damit zu

$$d_{pi} = (v_{p1}*\Delta t)/\Delta x.$$

Für eine Person $p_2$, die sich ebenfalls im Teilabschnitt 1c befindet, kann sich aufgrund der fortgeschrittenen relativen Position $X_{p2}$ die Situation ergeben, dass die entsprechende relative Positionsänderung $d_{p2}$ eine neue Position $p_2'$ für die Person $p_2$ ergibt, die außerhalb der Grenze des Teilabschnitts 1c und bereits im angrenzenden Teilabschnitt 1d liegt. In diesem Fall verlässt die Person $p_2$ den Teilabschnitt 1c. Daraufhin kann zunächst die Zeit $t_2$ ermittelt werden, welche die Person $p_2$ benötigt, um von ihrer momentanen relativen Position $x_{p2}$ zur Grenze des Teilabschnitts 1c zu gelangen:

$$t_2 = (1-x_{p2})*\Delta x/v_{p2}.$$

Danach kann der Bezugsteilabschnitt für die Person $p_2$ gewechselt werden, und der Rest der Bewegung im Zeitabschnitt $\Delta t$ in dem nächsten Teilabschnitt 1d durchgeführt, werden.

Für einen letzten Teilabschnitt 1e des Abschnitts 1 können Personen $p_i$, welche die Grenze des Teilabschnitts 1e erreichen, entweder aus der Simulation entfernt werden, oder in einen neuen Abschnitt 1', welcher einer neuen Wegekante zugeordnet sein kann, umgesetzt.

Fig. 4 zeigt einen schematischen Verfahrensablauf 10 zur Simulation eines Personenstroms auf dem in Fig. 3 dargestellten Abschnitt 1 einer Wegekante gemäß einer weiteren Ausführungsform der Erfindung. In einem ersten Schritt 10a, kann der Zellularautomat initialisiert werden. In einem zweiten Schritt 10b kann ein Zeitschritt $\Delta t$ initialisiert werden. hierzu können beispielsweise Personen aus einer Quelle 2a generiert werden und diesen neu generierten Personen Anfangsgeschwindigkeiten zugewiesen werden.

In einem dritten Schritt 11 wird mit einer ersten Person p mit der relativen Position $x_p$ in einem Teilabschnitt 1i der Länge $\Delta x$ begonnen. Diese Person p soll eine Positionsänderung erfahren, die in den folgenden Schritten berechnet werden kann.

In einem Schritt 11a wird zunächst die Zeit initialisiert, indem die für eine Bewegung noch vorhandene Zeitspanne auf die gesamte Zeitspanne des Zeitschritts $\Delta t$ gesetzt wird. In einem Schritt 12 kann die Geschwindigkeit $v_p$ der Person p in Abhängigkeit der lokalen Personendichte um die Person herum bestimmt werden. Dazu kann beispielsweise eine Personendichte in der von-Meumannschen Nachbarschaft zum jeweiligen Teilabschnitt der Person p bestimmt werden.

Die aktualisierte Geschwindigkeit $v_p$ kann dann in einem Schritt 13 genutzt werden, um die maximal mögliche Positionsänderung zu berechnen, um die sich die Person p in der verbleibenden Zeit bewegen kann. Dabei können verschiedene Fälle auftreten.

In einem Schritt 13a kann zunächst überprüft werden, ob sich die Person p durch die Positionsänderung aus ihrem aktuellen Teilabschnitt herausbewegt. Sollte dies nicht der Fall sein, kann die Positionsänderung in einem Schritt 14 vollzogen werden. Sollte die Person allerdings durch die Positionsänderung ihren aktuellen Teilabschnitt verlassen, wird in einem Schritt 13b zunächst überprüft, ob der verlassene Teilabschnitt der letzte Teilabschnitt des gesamten betrachteten Abschnitts ist. Ist dies der Fall, wird in einem weiteren Prüfschritt 13c überprüft, ob die Person an ihrem Ziel angekommen ist, worauf sie in einem Schritt 17 aus der Simulation entfernt werden würde, oder ob sie lediglich in einen anderen Abschnitt wechseln soll, worauf sie in einem Schritt 16 einer neuen Wegekante bzw. einen neuen Abschnitt zugewiesen wird.

Sollte der verlassene Teilabschnitt nicht der letzte Teilabschnitt des Abschnitts sein, kann in einem Schritt 15a die Person p in den nächsten Teilabschnitt gesetzt werden und in einem Schritt 15b die verbleibende Zeitspanne berechnet werden, die die Person p nach der Bewegung von ihrer aktuellen Position hin zur Grenze des verlassenen Teilabschnitts noch für die Bewegung in dem neu betretenen Teilabschnitt noch zur Verfügung hat.

Die Simulation kann daraufhin, solange noch Zeit für die Bewegung der Person p zur Verfügung steht, wieder zum Schritt 12 zurückkehren, wo eine erneute Geschwindigkeitsanpassung in dem neu betretenen Teilabschnitt in Abhängigkeit von der lokalen Personendichte erfolgt, und eine erneute Positionsänderung in dem neu betretenen Teilabschnitt gemäß der vorstehend erläuterten Verfahrensschritte erfolgt.

In einem Schritt 14a kann dann überprüft werden, ob alle Personen des Abschnitts bereits bewegt worden sind, und gegebenenfalls können weitere Personen p entsprechend bewegt werden. Sollten alle in dem Abschnitt befindlichen Personen bewegt worden sein, kann in einem Schritt 10c überprüft werden, ob die Simulationszeit überschritten ist. Sollte dies der Fall sein, kann die Simulation in einem Schritt 10d beendet werden. Andernfalls erfolgt eine Rückkehr zu Schritt 10b und ein nächster Zeitschritt $\Delta t$ kann initialisiert werden.

Das Verfahren 10 stellt ein in der Komplexität reduziertes Verfahren zur Simulation von Personenströmen entlang von Wegekanten eines Navigationsgraphen dar. Das Verfahren 10 berücksichtigt in vorteilhafter Weise Geschwindigkeitsanpassungen der individuellen Personen in Abhängigkeit von der lokalen Personendichte um sie herum. Durch Variation der unterschiedlichen Anfangsparameter und der Wahl des Navigationsgraphen der Verteilung von Personen auf verschiedene Wegekanten nach Verlassen eines simulierten Abschnitts können statistische Aussagen über Evakuierungsstrategien getroffen werden. Die mithilfe des erfindungsgemäßen Zellularautomaten gewonnenen Strategien sind robust gegenüber Schwankungen externer zufälliger Einflüsse und bieten innerhalb realistischer Zeitfenster die Möglichkeit optimale Evakuierungsstrategien zu ermitteln, da stochastische Schwankungen der Randbedingungen bereits inhärent im Modell berücksichtigt sind.

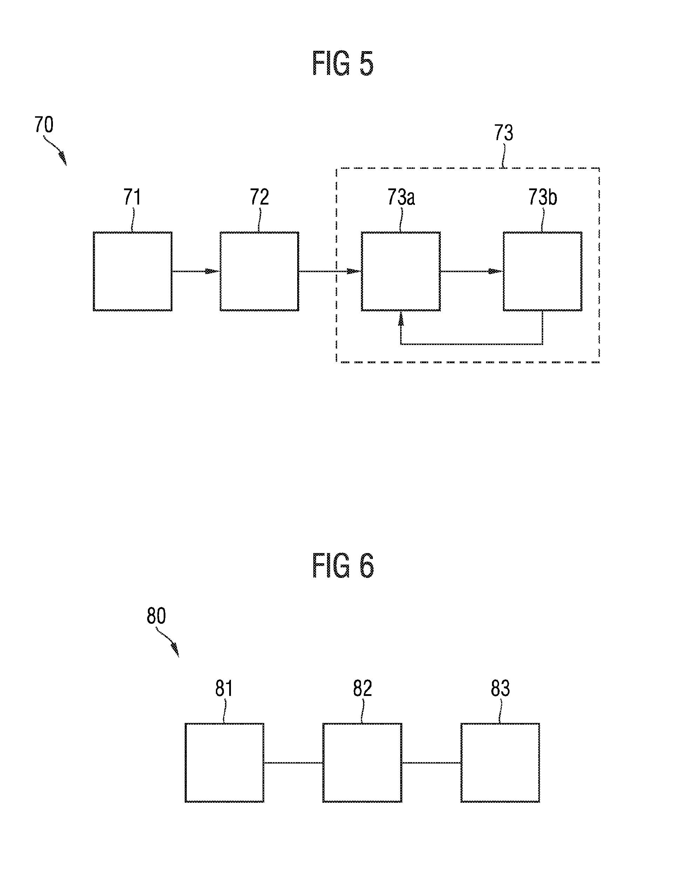

Fig. 5 zeigt eine schematische Darstellung eines Verfahrens 70 zum Simulieren eines Personenstroms entlang eines Navigationsgraphen gemäß einer weiteren Ausführungsform der Erfindung. Dabei kann das Verfahren 70 auf ähnliche Schritte wie das Verfahren 10 in Fig. 4 zurückgreifen. In einem ersten Schritt 71 wird ein Navigationsgraph mit einer Vielzahl von Knotenpunkten, welche über eine Vielzahl von Wegekanten verbunden sind, bereitgestellt. In einem zweiten Schritt 72 werden Positionen einer Vielzahl von Personen auf den Wegekanten mit jeweils einer jeder der Vielzahl von Personen zugeordneten Bewegungsgeschwindigkeit erzeugt. In einem dritten Schritt 73 werden periodisch Unterschritte 73a und 73b innerhalb einer vorbestimmten Periodendauer wiederholt. Der Schritt 73a umfasst das Aktualisieren der Bewegungsgeschwindigkeit für jede der Vielzahl von Personen in Abhängigkeit von der lokalen Personendichte in der Umgebung der jeweiligen Position der Person. Der Schritt 73b umfasst das Berechnen einer aktualisierten Position für jede der Vielzahl von Personen in Abhängigkeit von der aktualisierten Bewegungsgeschwindigkeit.

Fig. 6 zeigt eine schematische Darstellung einer Vorrichtung 80 zum Generieren eines Zellularautomaten zum Simulieren eines Personenstroms entlang eines Navigationsgraphen gemäß einer weiteren Ausführungsform der Erfindung. Die Vorrichtung 80 kann insbesondere dazu ausgelegt sein, ein Verfahren 70 nach Fig. 5 durchzuführen. Die Vorrichtung 80 umfasst dabei eine Bereitstellungseinrichtung 81, welche dazu ausgelegt ist, einen Navigationsgraphen mit einer Vielzahl von Knotenpunkten, welche über eine Vielzahl von Wegekanten verbunden sind, bereitzustellen, eine Erzeugungseinrichtung 82, welche dazu ausgelegt ist, einen zellularen Automaten mit Teilabschnitten auf der Basis des Navigationsgraphen und Positionen einer Vielzahl von Personen auf den Teilabschnitten mit jeweils einer jeder der Vielzahl von Personen zugeordneten Bewegungsgeschwindigkeit zu erzeugen, und eine Simulationseinrichtung 83, welche dazu ausgelegt ist, die Bewegungsgeschwindigkeit für jede der Vielzahl von Personen in Abhängigkeit von der lokalen Personendichte in der Umgebung der jeweiligen Position der Person zu aktualisieren, und eine aktualisierte Position für jede der Vielzahl von Personen in Abhängigkeit von der aktualisierten Bewegungsgeschwindigkeit zu berechnen.

**Patentansprüche**

1. Verfahren (10; 70) zum Simulieren eines Personenstroms entlang eines Navigationsgraphen (20), mit den Schritten:

Bereitstellen (71) eines Navigationsgraphen (20) mit einer Vielzahl von Knotenpunkten (21, 22, 23, 24, 25, 26, 27, 28), welche über eine Vielzahl von Wegekanten (31, 32, 33, 34) verbunden sind;
Erzeugen (72) von Positionen einer Vielzahl von Personen ($p_i$) auf den Wegekanten (31, 32, 33, 34) mit jeweils einer jeder der Vielzahl von Personen (pi) zugeordneten Bewegungsgeschwindigkeit ($v_{pi}$); und
periodisches Wiederholen eines Simulationsschritts (73) nach einer vorbestimmten Periodendauer ($\Delta t$), wobei der Simulationsschritt (73) umfasst:

Aktualisieren der Bewegungsgeschwindigkeit ($v_{pi}$) für jede der Vielzahl von Personen ($p_i$) in Abhängigkeit von der lokalen Personendichte ($\rho$) in der Umgebung der jeweiligen Position der Person ($p_i$);
Berechnen einer aktualisierten Position für jede der Vielzahl von Personen ($p_i$) in Abhängigkeit von der aktualisierten Bewegungsgeschwindigkeit ($v_{pi}$).

2. Verfahren (10; 70) nach Anspruch 1, wobei die Vielzahl von Wegekanten (31, 32, 33, 34) des Navigationsgraphen (20) in eine Vielzahl von Teilabschnitten (1a, 1b, 1c, 1d, 1e) unterteilt werden.

3. Verfahren (10; 70) nach Anspruch 2, wobei die lokale Personendichte ($\rho$) für jeden der Teilabschnitte (1a, 1b, 1c, 1d, 1e) bestimmt wird, und wobei das Aktualisieren der Bewegungsgeschwindigkeit ($v_{pi}$) in Abhängigkeit von der lokalen Personendichte ($\rho$) der benachbarten Teilabschnitte (1a, 1b, 1c, 1d, 1e) des Teilabschnitts, in dem die aktuelle Position der jeweiligen Person ($p_i$) liegt, erfolgt.

4. Verfahren (10; 70) nach Anspruch 2 oder 3, wobei das Berechnen der aktualisierten Position für jede der Vielzahl von Personen ($p_i$) relativ zur Position des Teilabschnitts, in dem sich die Position der jeweiligen der Vielzahl von Personen ($p_i$) befindet, erfolgt.

5. Verfahren (10; 70) nach einem der vorhergehenden Ansprüche, wobei die Positionskoordinaten (x) der Position der Vielzahl von Personen ($p_i$) eindimensional gewählt werden.

6. Verfahren (10; 70) nach einem der vorhergehenden Ansprüche, wobei die jeder der Vielzahl von Personen ($p_i$) zugeordneten Bewegungsgeschwindigkeiten ($v_{pi}$) einer Normalverteilung unterliegen.

7. Vorrichtung (80) zum Generieren eines zellularen Automaten zum Simulieren eines Personenstroms entlang eines Navigationsgraphen (20), mit:

einer Bereitstellungseinrichtung (81), welche dazu ausgelegt ist, einen Navigationsgraphen (20) mit einer Vielzahl von Knotenpunkten (21, 22, 23, 24, 25, 26, 27, 28), welche über eine Vielzahl von Wegekanten (31, 32, 33, 34) verbunden sind, bereitzustellen;
einer Erzeugungseinrichtung (82), welche dazu ausgelegt ist, einen zellularen Automaten mit Teilabschnitten (1a, 1b, 1c, 1d, 1e) auf der Basis des Navigationsgraphen (20) und Positionen einer Vielzahl von Personen ($p_i$) auf den Teilabschnitten (1a, 1b, 1c, 1d, 1e) mit jeweils einer jeder der Vielzahl von Personen ($p_i$) zugeordneten Bewegungsgeschwindigkeit ($v_{pi}$) zu erzeugen; und
einer Simulationseinrichtung (83), welche dazu ausgelegt ist, die Bewegungsgeschwindigkeit ($v_{pi}$) für jede der Vielzahl von Personen ($p_i$) in Abhängigkeit von der lokalen Personendichte ($\rho$) in der Umgebung der jeweiligen Position der Person zu aktualisieren, und eine aktualisierten Position für jede der Vielzahl von Personen ($p_i$) in Abhängigkeit von der aktualisierten Bewegungsgeschwindigkit ($v_{pi}$) zu berechnen.

8. Vorrichtung (80) nach Anspruch 7, wobei die Simulationseinrichtung (83) dazu ausgelegt ist, die lokale Personen-dichte ($\rho$) für jeden der Teilabschnitte (1a, 1b, 1c, 1d, 1e) zu bestimmen und die Bewegungsgeschwindigkeit ($v_{pi}$) in Abhängigkeit von der lokalen Personendichte ($\rho$) der benachbarten Teilabschnitte (1a, 1b, 1c, 1d, 1e) des Teilabschnitts, in dem die aktuelle Position der jeweiligen Person liegt, zu aktualisieren.

9. Vorrichtung (80) nach Anspruch 7 oder 8, wobei die Simulationseinrichtung (83) dazu ausgelegt ist, die aktualisierte Position für jede der Vielzahl von Personen ($p_i$) relativ zur Position des Teilabschnitts, in dem sich die Position der jeweiligen der Vielzahl von Personen ($p_i$) befindet, zu berechnen.

**10.** Vorrichtung (80) nach einem der Ansprüche 7 bis 9, wobei die Positionskoordinaten (x) der Position der Vielzahl von Personen ($p_i$) eindimensional sind.

**11.** Vorrichtung (80) nach einem der Ansprüche 7 bis 10, wobei die jeden der Vielzahl von Personen ($p_i$) zugeordneten Bewegungsgeschwindigkeiten ($v_{pi}$) einer Normalverteilung unterliegen.

## FIG 1

## FIG 2

# FIG 3

# FIG 4

FIG 5

FIG 6

**Europäisches Patentamt**
**European Patent Office**
**Office européen des brevets**

## EUROPÄISCHER RECHERCHENBERICHT

Nummer der Anmeldung

EP 10 19 5430

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | A. Kneidl, A. Borrmann, D. Hartmann: "Einsatz von graphbasierten Ansaetzen in einer mikroskopischen Personenstromsimulation fuer die Wegewahl der Fussgaenger", Tagungsband des 22. Forum Bauinformatik, 29. September 2010 (2010-09-29), XP002635309, Gefunden im Internet: URL:http://forum2010.bauinformatik.tu-berl in.de/drafts/draft_15.pdf [gefunden am 2011-05-12] * das ganze Dokument * ----- | 1-11 | INV. G06N3/00 |
| X | M. HOECKER, V. BERKHAHN, A. KNEIDL, A. BORRMANN, W. KLEIN: "Graph-based approaches for simulating pedestrian dynamics in building models", PROCEEDINGS OF THE 8TH EUROPEAN CONFERENCE ON PRODUCT AND PROCESS MODELLING (ECPPM'2010), 14. September 2010 (2010-09-14), Seiten 389-394, XP002635310, DOI: 10.1201/b10527-65 * das ganze Dokument * ----- | 1-11 | |
| X | D. HARTMANN: "Adaptive pedestrian dynamics based on geodesics", NEW JOURNAL OF PHYSICS, Bd. 12, Nr. 4, 043032, 14. April 2010 (2010-04-14), XP020176119, * das ganze Dokument * ----- -/-- | 1-11 | RECHERCHIERTE SACHGEBIETE (IPC) G06N G06F |

Der vorliegende Recherchenbericht wurde für alle Patentansprüche erstellt

| Recherchenort | Abschlußdatum der Recherche | Prüfer |
|---|---|---|
| Den Haag | 12. Mai 2011 | Douarche, Nicolas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................................
& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 10 19 5430

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | A. Kneidl, M. Thiemann, A. Borrmann, S. Ruzika, H. W. Hamacher, G. Koester, E. Rank: "Bidirectional coupling of macroscopic and microscopic approaches for pedestrian behavior prediction", Proceedings of the 5th international conference on Pedestrian and Evacuation Dynamics (PED'2010), 8. März 2010 (2010-03-08), XP002635311, Gefunden im Internet: URL:http://www.andre-borrmann.de/docs/paper_Kneidl_PED2010.pdf [gefunden am 2011-05-12] * das ganze Dokument * | 1-11 | |
| | ----- | | |
| A | H. KLUEPFEL: "A two-dimensional cellular automaton model for crowd motion", A CELLULAR AUTOMATON MODEL FOR CROWD MOVEMENT AND EGRESS SIMULATION, 23. Juli 2003 (2003-07-23), Seiten 31-64, XP007912419, * Abschnitt 3.7 * | 1-11 | |
| | ----- | | RECHERCHIERTE SACHGEBIETE (IPC) |
| A | WO 2010/069982 A1 (SIEMENS AG [DE]; KLEIN WOLFRAM [DE]; KOESTER GERTA [DE]; MEISTER ANDRE) 24. Juni 2010 (2010-06-24) * Anspruch 3 * * internationaler Recherchenbericht * | 1-11 | |
| | ----- | | |

Der vorliegende Recherchenbericht wurde für alle Patentansprüche erstellt

| Recherchenort | Abschlußdatum der Recherche | Prüfer |
|---|---|---|
| Den Haag | 12. Mai 2011 | Douarche, Nicolas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................................
& : Mitglied der gleichen Patentfamilie, übereinstimmendes Dokument

EPO FORM 1503 03.82 (P04C03)

# EP 2 466 530 A1

**ANHANG ZUM EUROPÄISCHEN RECHERCHENBERICHT
ÜBER DIE EUROPÄISCHE PATENTANMELDUNG NR.**

EP 10 19 5430

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-05-2011

| Im Recherchenbericht angeführtes Patentdokument | Datum der Veröffentlichung | Mitglied(er) der Patentfamilie | Datum der Veröffentlichung |
|---|---|---|---|
| WO 2010069982 A1 | 24-06-2010 | DE 102008063452 A1 | 15-07-2010 |

EPO FORM P0461

Für nähere Einzelheiten zu diesem Anhang : siehe Amtsblatt des Europäischen Patentamts, Nr.12/82

16